# EUROPÄISCHE PATENTSCHRIFT

(11) **EP 1 935 838 B1**
(45) Veröffentlichungstag und Bekanntmachung des Hinweises auf die Patenterteilung: **29.02.2012**
(21) Anmeldenummer: 07023263.2
(22) Anmeldetag: 30.11.2007
(51) Int. Cl.: B66F 9/24, B62D 51/04, B60T 7/10, B62D 51/00

(54) **Deichselgeführtes Flurförderzeug**
Industrial truck lead by a drawbar
Chariot de manutention commandé par timon

(30) Priorität: 22.12.2006 DE 102006061069
(43) Veröffentlichungstag der Anmeldung: 25.06.2008
(73) Patentinhaber: STILL SAS, 77716 Marne La Vallée Cedex 4 (FR)
(72) Erfinder: Brouart, Francois, 60880 Armancourt (FR); Ferreira, Paulo, 60870 Rieux (FR)
(74) Vertreter: Geirhos, Johann

(56) Entgegenhaltungen:
- EP-A- 1 013 602
- EP-A- 1 264 759
- US-A- 2 645 297
- US-A- 3 791 474
- US-A1- 2003 029 647

## Beschreibung

Die Erfindung betrifft ein Flurförderzeug mit einer um eine horizontale Achse schwenkbaren Lenkdeichsel, einer Betriebsbremsvorrichtung, wobei das Flurförderzeug mindestens einen Fahrmotor, insbesondere mindestens einen elektrischen Fahrmotor, aufweist und der Fahrmotor als Betriebsbremsvorrichtung ausgebildet ist, und Mitteln zur stufenlosen Erfassung des Schwenkwinkels der Lenkdeichsel um die horizontale Achse.

Deichselgeführte Flurförderzeuge, beispielsweise Hoch- oder Niederhubwagen und Kommissionierer, weisen als Lenkelement eine Deichsel auf, mit der durch Verschwenken um eine vertikale Achse das Fahrzeug gelenkt wird, während die Steuerung von Fahrtrichtung und -geschwindigkeit zumeist über Flügelschalter im Bereich des Deichselkopfes vorgenommen wird.

Die Deichsel kann zudem von einer annähernd senkrechten Endstellung um eine horizontale Achse in eine annähernd waagerechte Endstellung verschwenkt werden, um die Deichsel an die Körpergröße des Benutzers anzupassen und um entweder einen großen Hebelarm zur Verfügung zu haben, der den Kraftaufwand beim Lenken des Fahrzeugs verringert, oder aber bei hochgestellter Deichsel den Platzbedarf des Fahrzeugs, insbesondere beim Rangieren, zu verringern.

Um die Sicherheit der Fahrzeuge zu erhöhen, ist die Deichsel zumeist derart mit einer Parkbremsvorrichtung des Fahrzeugs gekoppelt, dass eine Bremsung ausgelöst wird, wenn sich die Deichsel in der Nähe der annähernd senkrechten Endstellung, d.h. in dem so genannten oberen Bremsbereich, befindet. Weiterhin kann je nach Ausgestaltung des Fahrzeugs bei Annäherung an die annähernd waagerechte Endstellung der Deichsel, d.h. in einem so genannten unteren Bremsbereich, ebenfalls eine Bremsung ausgelöst werden. Um das Fahrzeug zum Stillstand zu bringen, muss die Bedienperson daher nur die Deichsel in einen der Bremsbereiche bringen, um die Parkbremsvorrichtung auszulösen.

Zusätzlich ist die Deichsel mit einem Federmechanismus versehen, der diese selbsttätig in die annähernd senkrechte Endstellung bringt und dort hält. Lässt die Bedienperson die während der Fahrt aus der senkrechten Endstellung ausgeschwenkte Deichsel los, wird diese nach oben geschwenkt und automatisch eine Bremsung eingeleitet. Damit wird zuverlässig vermieden, dass das Fahrzeug außer Kontrolle gerät. Gleichzeitig wirkt die Parkbremsvorrichtung auch als Park- oder Haltebremse, die das Fahrzeug im Stillstand sichert.

Gemäß der geschilderten Verwendung weist die Parkbremsvorrichtung zwar eine gute Wirkung auf, ist aber schlecht dosierbar und mit hohem Verschleiß behaftet. Eine umsichtige Bedienperson wird daher im Normalbetrieb das Fahrzeug durch eine Abbremsung über den als Betriebsbremsvorrichtung wirkenden Fahrmotor zum Stillstand bringen, indem sie die Flügelschalter zur Steuerung von Fahrtrichtung und - geschwindigkeit auf Nullstellung oder in Gegenfahrtrichtung bringt.

Deichselgeführte Flurförderzeuge werden jedoch - im Gegensatz beispielsweise zu Gegengewichtsgabelstaplern - häufig auch von unerfahrenen Bedienpersonen betrieben. Gerade diesen Bedienpersonen fällt es oft schwer, das Fahrverhalten des Fahrzeugs richtig einzuschätzen und die Bremsung so vorzunehmen, dass dieses rechtzeitig zum Stehen kommt. Daraus ergibt sich ein erhebliches Sicherheitsrisiko, das bei Fahrzeugen mit ausklappbarer oder fest installierter Fahrerplattform aufgrund der im Gegensatz zu reinen Mitgängerfahrzeugen häufig höheren Fahrgeschwindigkeiten nochmals höher ist.

Wenn die Bedienperson bemerkt, dass die rechtzeitige Bremsung mit der Betriebsbremse nicht mehr möglich ist, wird sie versuchen, durch eine Bewegung der Deichsel zu einer der Endstellungen das Fahrzeug mit der maximalen Bremswirkung der Parkbremsvorrichtung zum Stillstand zu bringen. Dieses Verhalten bedingt einen erhöhten Verschleiß der Parkbremsvorrichtung. Ein weiteres Sicherheitsrisiko besteht darin, dass die Bremswirkung bei dieser Bremsung erst dann einsetzt, wenn die Deichsel einen der Bremsbereiche erreicht, d.h. deutlich später, als die Bedienperson dies beabsichtigt. Gefährlich ist dabei auch, dass bei Bremsungen mittels der Parkbremsvorrichtung die Bremswirkung beinahe schlagartig einsetzt, sobald die Deichsel in einen der Bremsbereiche gelangt. Dies erschwert es der Bedienperson erheblich, die Kontrolle über das Fahrzeug auszuüben.

Aus der US 2003/0029647 A1 ist ein Mitläufer-Hubwagen bekannt, bei dem in horizontaler oder vertikaler Stellung der Deichsel eine Federspeicherbremse das gesteuerte Rad bremst.

Aus der EP 1 013 602 A1 ist ein Flurförderfahrzeug mit handgeführter Deichsel bekannt, bei dem abhängig von der Neigung der Deichsel um eine horizontale Achse ein unterer Bremsbereich und ein oberer Bremsbereich mit einem dazwischenliegenden Fahrbereich definiert werden.

Aus der EP 1 264 759 A1 ist ein Fluhrförderzeug mit einer um eine horizontale Achse schwenkbaren Deichsel bekannt, bei dem die maximale Fahrgeschwindigkeit von dem Schwenkwinkel der Deichsel abhängt.

Der Erfindung liegt daher die Aufgabe zugrunde, ein Flurförderzeug mit einer um eine horizontale Achse schwenkbaren Lenkdeichsel, einer Betriebsbremsvorrichtung und Mitteln zur stufenlosen Erfassung des Schwenkwinkels der Lenkdeichsel um die horizontale Achse zu schaffen, mit dem einfaches und sicheres Bremsen auch für ungeübte Bedienpersonen ermöglicht wird.

Diese Aufgabe wird erfingdungsgemäß dadurch gelöst, dass die Betriebsbremsvorrichtung derart ausgebildet ist, dass die Bremswirkung der Betriebsbremsvorrichtung in Abhängigkeit vom Schwenkwinkel und/oder der Schwenkgeschwindigkeit und/oder der Schwenkbeschleunigung der Deichsel um die horizontale Achse einstellbar ist, wobei das Flurförderzeug mindestens einen Fahrmotor, insbesondere mindestens einen elektrischen Fahrmotor, aufweist und der Fahrmotor als Betriebsbremsvorrichtung ausgebildet ist. Die Winkelstellung der Deichsel lässt, ebenso wie deren Beschleunigung und Geschwindigkeit beim Verschwenken Rückschlüsse auf den Betriebszustand des Fahrzeugs und damit auf die gewünschte Bremswirkung zu. So ist beispielsweise bei schneller Bewegung der Deichsel davon auszugehen, dass eine schnelle Bremsung gewünscht ist. Ebenso ist bei einem Schwenkwinkel, bei dem eine erhöhte Gefahr für die Bedienperson anzunehmen ist - beispielsweise, wenn die Deichsel sich nahe des oberen Bremsbereichs befindet und daher die Bedienperson vermutlich nahe des Fahrzeugs steht - eine schnelle Bremsung eher vonnöten als bei einer Stellung, in der keine unmittelbare Gefahr droht.

Wenn das Flurförderzeug mindestens einen Fahrmotor, insbesondere mindestens einen elektrischen Fahrmotor, aufweist und der Fahrmotor als Betriebsbremsvorrichtung ausgebildet ist, wird keine eigenständige Betriebsbremsvorrichtung benötigt. Insbesondere elektrische Fahrmotoren bieten eine gute Dosierbarkeit der Bremswirkung, sind praktisch verschleißfrei und ermöglichen es, Energie beim Bremsen zurückzugewinnen. Weiterhin ist es von besonderem Vorteil, wenn die Betriebsbremsvorrichtung derart ausgebildet ist, dass die Bremswirkung der Betriebsbremsvorrichtung in Abhängigkeit vom Schwenkwinkel und/oder der Schwenkgeschwindigkeit und/oder der Schwenkbeschleunigung der Deichsel um die horizontale Achse annähernd stufenlos einstellbar ist. Dadurch wird eine besonders feine Dosierbarkeit der Bremswirkung erzielt, die es ermöglicht, den Bremsvorgang optimal an äußere Gegebenheiten anzupassen. Als praktisch stufenlos wird dabei eine Stufung angesehen, die so fein ist, dass für die durchschnittliche Bedienperson der Unterschied zwischen zwei Stufen nicht mehr eindeutig wahrnehmbar ist.

Vorteilhafterweise ist die Betriebsbremsvorrichtung derart ausgebildet, dass die Bremswirkung der Betriebsbremsvorrichtung annähernd proportional zum Schwenkwinkel und/oder der Schwenkgeschwindigkeit und/oder der Schwenkbeschleunigung der Deichsel einstellbar. Dadurch kann beispielsweise bei schnellen Deichselbewegungen, die auf eine besondere Gefahrensituation schließen lassen, die Bremswirkung größer gewählt werden als bei einem langsamen Anheben, bei dem die Bedienperson wahrscheinlich das Fahrzeug ausrollen lassen will, um dann bei Erreichen des Haltepunkts die Parkbremsvorrichtung als Haltebremse zu aktivieren. Oder die Bremswirkung kann mit abnehmendem Schwenkwinkel, d.h. Annäherung an die senkrechte Endstellung, erhöht werden, um bei zunehmend näher am Fahrzeug befindlichem Fahrer die Sicherheit zu erhöhen.

Es ist besonders vorteilhaft, wenn die Betriebsbremsvorrichtung derart ausgebildet ist, dass die Größe der Bremswirkung derart einstellbar ist, dass bei Erreichen mindestens einer Endstellung und/oder eines Bremsbereichs, vorzugsweise der oberen Endstellung beziehungsweise des oberen Bremsbereichs der Deichsel das Flurförderzeug annähernd stillsteht. Dadurch wird die Parkbremsvorrichtung nicht mehr benötigt, um das Fahrzeug abzubremsen, womit sich deren Verschleiß reduziert. Zudem kann diese, wenn ihre Wirkung nur im Stillstand benötigt wird, kleiner dimensioniert werden als bei einem Fahrzeug nach dem Stand der Technik.

Es ist ebenfalls von Vorteil, wenn die Abhängigkeit der Bremswirkung der Betriebsbremsvorrichtung vom Schwenkwinkel und/oder der Schwenkgeschwindigkeit und/oder der Schwenkbeschleunigung der Deichsel um die horizontale Achse in Form einer Kennlinie und/oder eines Kennfeldes vorgegeben ist. Eine Kennlinie und/oder ein Kennfeld ermöglichen eine besonders genaue Abstimmung des Bremsverhaltens auf die Bewegung der Deichsel. Insbesondere bei einem Kennfeld, das die Bremswirkung in Abhängigkeit von mehreren Größen, beispielsweise der Deichselposition und - geschwindigkeit, vorgibt, ist dies sehr genau möglich.

Eine vorteilhafte Weiterbildung der Erfindung besteht darin, dass die in dem Kennfeld verwendeten Eingangsgrößen mindestens eine das Bremsverhalten des Flurförderzeugs beeinflussende Größe, insbesondere eine der im Folgenden aufgezählten Größen, umfassen: Schwenkwinkel der Deichsel, Schwenkgeschwindigkeit der Deichsel, Schwenkbeschleunigung der Deichsel, Fahrtrichtung des Fahrzeugs, Fahrgeschwindigkeit des Fahrzeugs, Fahrbeschleunigung des Fahrzeugs, Lenkwinkel, Gewicht des Fahrzeugs und/oder der Last. Damit ist sichergestellt, dass das Bremsverhalten auf den Betriebszustand und die Einsatzbedingungen des Fahrzeugs bestmöglich abgestimmt werden kann und weder eine unnötig starke und zu erhöhtem Verschleiß führende noch eine zu schwache und damit sicherheitsgefährdende Bremswirkung eingestellt wird.

Es ist von Vorteil, wenn die Mittel zur stufenlosen Erfassung des Schwenkwinkels und/oder der Schwenkgeschwindigkeit und/oder der Schwenkbeschleunigung der Deichsel um die horizontale Achse mindestens ein Potentiometer umfassen. Potentiometer sind einfache und kompakte Bauteile, die im Bereich der Schwenkachse leicht positioniert werden können und deren Signal leicht ausgewertet und in eine stufenlose Winkelinformation umgesetzt werden kann.

Weitere Vorteile und Einzelheiten der Erfindung werden im Folgenden anhand des in der Zeichnung dargestellten Ausführungsbeispiels näher erläutert. Gleiche beziehungsweise funktional gleiche Teile sind mit gleichen Bezugszeichen gekennzeichnet. Dabei zeigt
- Figur 1: einen Niederhubwagen mit vier verschiedenen Stellungen der Deichsel als Beispiel eines erfindungsgemäßen Flurförderzeugs,
- Figur 2: die Geschwindigkeit des Fahrzeugs als Funktion der Zeit für zwei verschiedene Schwenkwinkel der Deichsel.
- Figur 3: ein Schemabild zur Berechnung der Bremswirkung der Betriebsbremse

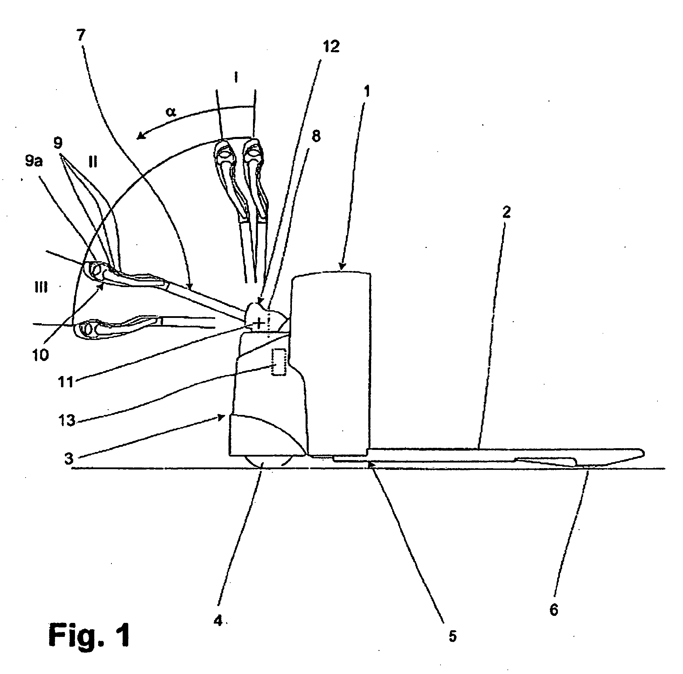

In Figur 1 ist ein Hubwagen 1 mit einem gabelförmigen Lastaufnahmemittel 2 gezeigt. Der Hubwagen 1 besteht aus einem Antriebsteil 3 mit einem Antriebsrad 4 und einem hier nicht dargestellten Stützrad, sowie einem Lastteil 5 mit dem Lastaufnahmemittel 2 und Laufrollen 6. Im Antriebsteil 3 sind unter anderem ein Fahr- und ein Hubantrieb untergebracht, die hier nicht dargestellt sind. Über eine Deichsel 7 wird das Fahrzeug 1 durch Verschwenkung der Deichsel 7 um eine vertikale Achse 8 gelenkt sowie über Bedienelemente 9, 9a, die an einem Deichselkopf 10 angeordnet sind, die Fahrzeugfunktionen, wie beispielsweise Fahrtrichtung und -geschwindigkeit sowie Heben und Senken des Lastaufnahmemittels 2 gesteuert.

Weiterhin ist die Deichsel 7 um eine horizontale Schwenkachse 11 beweglich gelagert. Dadurch kann die Deichsel 7 an die Größe der Bedienperson angepasst und beim Rangieren auf engem Raum durch Hochstellen der Deichsel 7 der Platzbedarf des Hubwagens 1 reduziert werden. Ein im Deichselfuß 12 angeordnetes, hier nicht dargestelltes Schwenkgelenk ist mit einem ebenfalls nicht dargestellten Potentiometer gekoppelt, das seinen Widerstand in Abhängigkeit vom Schwenkwinkel α der Deichsel 7 um die horizontale Schwenkachse 11 ändert. Diese Änderung wird in der Steuerung 13 des Hubwagens 1 erfasst und daraus der Schwenkwinkel α berechnet.

Der Hubwagen 1 wird über das Antriebsrad 4 nicht nur angetrieben und gelenkt, sondern auch abgebremst. Hierzu ist beim gezeigten Hubwagen 1 wie auch bei Fahrzeugen nach dem Stand der Technik der nicht dargestellte elektrische Fahrantriebsmotor als Betriebsbremsvorrichtung sowie eine ebenfalls nicht dargestellte davon unabhängige Parkbremsvorrichtung vorgesehen. Die Parkbremsvorrichtung arbeitet nach elektromagnetischem Wirkprinzip und wird abhängig von der Deichselstellung aktiviert. Der Schwenkbereich der Deichsel 7 ist dazu in drei Bereiche unterteilt: Befindet sich die Deichsel im Bereich I oder im Bereich III wird automatisch die Parkbremsvorrichtung mit voller Bremskraft aktiviert. Im Bereich II ist normaler Fahrbetrieb möglich und die Parkbremsvorrichtung gelöst.

Im Deichselfuß 12 ist weiterhin ein hier nicht dargestellter Federmechanismus angeordnet, der die Deichsel 7 selbsttätig in eine annähernd senkrechte Stellung bringt beziehungsweise dort hält. Dies hat zur Folge, dass, sobald die Bedienperson die Deichsel 7 loslässt, diese in den Bereich I bewegt und der Hubwagen 1 durch Aktivierung der Parkbremsvorrichtung selbsttätig abgebremst wird. Im Bereich II ist nur die Betriebsbremsvorrichtung aktivierbar. Dies geschieht, indem die Bedienperson die Flügelschalter 9a, mit denen die Fahrgeschwindigkeit und -richtung eingestellt wird, entweder loslässt, um eine geringe Bremswirkung zu erzielen, oder in Gegenrichtung auslenkt, um eine große Bremswirkung zu erzielen.

Bei Fahrzeugen nach dem Stand der Technik wird durch die Stellung des Flügelschalters 9a eine Sollgeschwindigkeit vorgegeben und die elektrische Steuerung 13 des Fahrmotors steuert diesen so an, dass die Sollgeschwindigkeit in einem vorgegebenen Zeitraum erreicht wird, d.h. es wird intern eine Geschwindigkeitsrampe vorgegeben und das Moment des Fahrmotors so angesteuert, dass das Fahrzeug 1 sich entsprechend dieser Rampe verhält. Befindet sich der erfindungsgemäße Hubwagen 1 im Bremsmodus, d.h. ist der Flügelschalter 9a in Neutralstellung oder in die zur augenblicklichen Fahrtrichtung entgegengesetzte Richtung ausgelenkt, wird die Bremswirkung des Fahrmotors in Abhängigkeit von der Position der Deichsel 7 beziehungsweise der daraus ableitbaren Größen eingestellt.

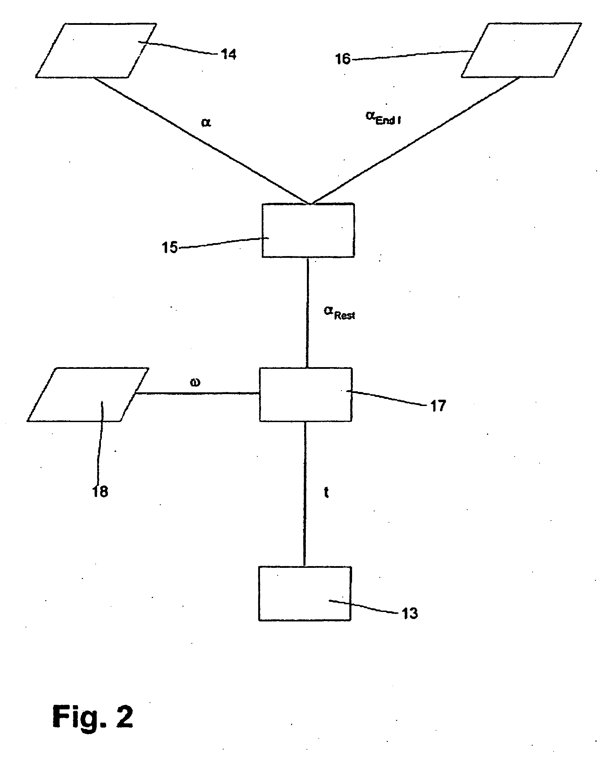

Eine einfache Verkörperung der Erfindung ist schematisch in Figur 2 dargestellt: Der augenblickliche Schwenkwinkel α der Deichsel 7 wird in einer Messwerterfassungsvorrichtung 14 aus dem Widerstand des im Deichselfuß 12 angeordneten Potentiometers ermittelt und in einer Subtraktionsvorrichtung 15 die Differenz dem in einer Speichervorrichtung 16 abgelegten Winkel α_{End I} des Beginns des Bereichs I der Deichsel 7 berechnet. Diese Differenz gibt den bis zum Bremsbereich zurückzulegenden Restwinkel α_{Rest} an, der in einer Divisionsvorrichtung 17 durch eine in einer Speichervorrichtung 18 abgelegte angenommene Winkelgeschwindigkeit ω der Deichsel 7 dividiert wird. Dies ergibt die Zeit t, innerhalb derer das Fahrzeug 1 zum Stillstand gebracht werden muss. Anhand dieser Zeit wird in der elektrischen Steuerung 13 die Verzögerungsrampe, d.h. der Zusammenhang zwischen Fahrgeschwindigkeit und Zeit, für den Fahrmotor festgelegt und davon ausgehend das Drehmoment des elektrischen Fahrmotors so angesteuert, dass der Hubwagen 1 zum Stillstand kommt, wenn die Deichsel 7 mit der angenommenen Geschwindigkeit bewegt wird und den angestrebten Bremsbereich erreicht. Die angenommene Winkelgeschwindigkeit der Deichsel 7 ist im Ausführungsbeispiel eine empirisch ermittelte Größe, die die bei unterschiedlichen Bedienpersonen ermittelte Durchschnittsgeschwindigkeit für eine schnelle Bewegung der Deichsel 7 von einer Mittellage zum Endpunkt wiedergibt, es sind jedoch auch andere Werte möglich, beispielsweise die Geschwindigkeit, die sich einstellt, wenn die Deichsel 7 mittels des Federmechanismus im Deichselfuß 12 in eine aufrechte Stellung gebracht wird.

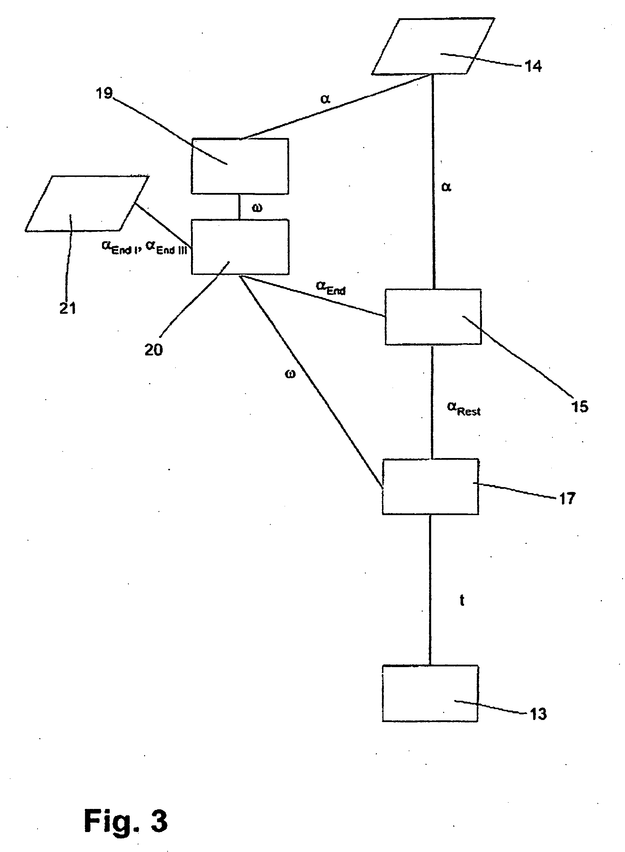

Eine Weiterbildung der Erfindung, die eine genauere Steuerung der Bremswirkung bietet, ist in Figur 3 schematisch gezeigt: Der Schwenkwinkel α der Deichsel 7 wird in der gleichen Weise wie oben geschildert in der Messwerterfassungsvorrichtung 14 ermittelt. In einer Berechnungsvorrichtung 19 wird eine Zeitmessung vorgenommen und damit aus dem Schwenkwinkel α die Winkelgeschwindigkeit ω der Deichsel 7 berechnet. Bei dem gezeigten Verfahren wird auch das Vorzeichen der Winkelgeschwindigkeit ω und somit die Bewegungsrichtung der Deichsel 7, die entweder zum Bereich I (negatives Vorzeichen) oder zum Bereich III (positives Vorzeichen) hinführt, ermittelt.

In einer Auswahlvorrichtung 20 wird abhängig vom Vorzeichen der Winkelgeschwindigkeit ω der angestrebte Bremsbereich ermittelt und der in der Speichervorrichtung 21 abgelegte Winkel α_{End I} beziehungsweise α_{End III}, an dem der Bereich I beziehungsweise III beginnt, ausgewählt und an die Subtraktionsvorrichtung 15 übermittelt, wo auf die bereits geschilderte Weise der bis zum Bremsbereich zurückzulegenden Restwinkel α_{Rest} bestimm t wird.

Der Restwinkel α_{Rest} wird in der Divisionsvorrichtung 17 durch die in der Berechnungsvorrichtung 19 ermittelte Winkelgeschwindigkeit ω dividiert. Damit ist es möglich, die Zeit t bis zum Erreichen des Bremsbereichs wesentlich genauer als mit dem oben geschilderten Verfahren zu berechnen. Insbesondere kann eine ständige Anpassung der Bremswirkung an eine Änderung der Winkelgeschwindigkeit ω vorgenommen werden.

Neben den geschilderten Ausführungsformen sind auch weitere Ausbildungen der Erfindung denkbar. Selbstverständlich könne anstelle eines Potentiometers und der Berechnungsvorrichtung 19 auch andere geeignete Vorrichtungen zur Ermittlung der Winkelposition α und/oder der Winkelgeschwindigkeit ω und/oder der Winkelbeschleunigung der Deichsel 7 Verwendung finden. Ebenso können beispielsweise die einzelnen Komponenten, die zur Ermittlung der Bremswirkung gemäß den Figuren 2 und 3 dienen, als diskrete Bausteine vorgesehen oder in einer eigenständigen Baugruppe integriert oder Bestandteil der Steuerung 13 sein.

Weiterhin ist insbesondere eine direkte Koppelung der Bremswirkung an die Stellung der Deichsel 7 denkbar, bei der die Bremswirkung mit abnehmendem Winkel d. h. mit Annäherung der Deichsel 7 an die senkrechte Position beziehungsweise den Bremsbereich I, zunimmt. Dabei wird von der Annahme ausgegangen, dass sich mit Annäherung der Deichsel 7 an die senkrechte Position auch die Bedienperson zunehmend näher am Fahrzeug 1 befindet und daher die Gefahr für die Bedienperson auch zunimmt.

Ebenso sind Ausführungsformen denkbar, bei denen unabhängig von der Stellung der Flügelschalter 9a die Betriebsbremse aktiviert wird, wenn einen bestimmte Winkelgeschwindigkeit und/oder -beschleunigung bei der Schwenkbewegung der Deichsel 7 um die horizontale Schwenkachse 11 überschritten wird. Eine ungeübte Bedienperson wird nämlich bei Auftreten einer gefährlichen Situation oft nicht geistesgegenwärtig genug sein, gleichzeitig die Flügelschalter 9a loszulassen und die Deichsel 7 senkrecht zu stellen, beziehungsweise bei dem Versuch, das Fahrzeug 1 mittels der Parkbremsvorrichtung abzustoppen, die Deichsel 7 fest umfassen und dabei möglicherweise versehentlich die Flügelschalter 9a in ungewünschter Weise betätigen.

Bei den gezeigten Ausführungsbeispielen fließt die Richtung der Deichselbewegung (d.h. das Vorzeichen der Winkelgeschwindigkeit) vor allem dadurch ein, dass festgelegt wird, ob der Restweg, den die Deichsel bis zum Erreichen eines Bremsbereichs zurückzulegen hat, hinsichtlich des Bereichs I oder III zu berechnen ist. Es ist jedoch auch denkbar, die Richtung der Schwenkbewegung dahingehend zu berücksichtigen, dass die Bremswirkung für Bewegungen der Deichsel zu einer annähernd senkrechten Endstellung hin anders gewählt wird als bei einer Bewegung zu einer annähernd waagerechten Endstellung hin.

Auch ist eine Berücksichtigung zusätzlicher, nicht von der Deichselbewegung abhängiger Größen, wie beispielsweise der Fahrgeschwindigkeit und -richtung denkbar, die beispielsweise in einem Kennfeld zusammen mit ersteren abgelegt sein können. So ist es möglicherweise sinnvoll, bei einer Bewegung des Fahrzeugs in Richtung des Antriebsteils 3 generell eine größere Bremswirkung vorzusehen als bei einer Bewegung in Richtung des Lastteils 5. Damit wird der im ersten Fall größeren Gefahr für die Bedienperson durch das sich auf sie zu bewegende Fahrzeug 1 sicher begegnet, während bei einem von der Bedienperson sich wegbewegenden Fahrzeug 1 eine schonendere Bremsung vorgenommen wird.

Anstelle des Beginns des angestrebten Bremsbereichs, d.h. von Bereich I beziehungsweise III, kann auch der Endpunktes des Schwenkwinkels α als Eingangswert für die Subtraktionsvorrichtung 15 verwendet werden. Dann wird mit Erreichen des Bremsbereichs das Flurförderzeug noch eine Restgeschwindigkeit aufweisen, die im Zusammenwirken von Parkbremsvorrichtung und Betriebsbremsvorrichtung abgebaut wird. Der dabei auftretende Ruck macht der Bedienperson deutlich, dass die Parkbremsvorrichtung aktiv ist, was in Sonderfällen gewünscht sein kann.

## Patentansprüche

1. Flurförderzeug (1) mit einer um eine horizontale Achse (11) schwenkbaren Lenkdeichsel (7), einer Betriebsbremsvorrichtung, wobei das Flurförderzeug (1) mindestens einen Fahrmotor, insbesondere mindestens einen elektrischen Fahrmotor, aufweist und der Fahrmotor als Betriebsbremsvorrichtung ausgebildet ist, und Mitteln zur stufenlosen Erfassung des Schwenkwinkels der Lenkdeichsel (7) um die horizontale Achse (11),
**dadurch gekennzeichnet,**
**dass** die von dem Fahrmotor gebildete Betriebsbremsvorrichtung derart ausgebildet ist, dass die Bremswirkung in Abhängigkeit vom Schwenkwinkel und/oder der Schwenkgeschwindigkeit und/oder der Schwenkbeschleunigung der Deichsel (7) um die horizontale Achse (11) einstellbar ist.

2. Flurförderzeug (1) nach Anspruch 1, **dadurch gekennzeichnet, dass** die Betriebsbremsvorrichtung derart ausgebildet ist, dass die Bremswirkung der Betriebsbremsvorrichtung in Abhängigkeit vom Schwenkwinkel und/oder der Schwenkgeschwindigkeit und/oder der Schwenkbeschleunigung der Deichsel (7) um die horizontale Achse (11) annähernd stufenlos einstellbar ist.

3. Flurförderzeug (1) nach Anspruch 1 oder 2, **dadurch gekennzeichnet, dass** die Betriebsbremsvorrichtung derart ausgebildet ist, dass die Bremswirkung der Betriebsbremsvorrichtung annähernd proportional zum Schwenkwinkel und/oder der Schwenkgeschwindigkeit und/oder der Schwenkbeschleunigung der Deichsel (7) einstellbar ist.

4. Flurförderzeug (1) nach einem der Ansprüche 1 bis 3, **dadurch gekennzeichnet, dass** die Betriebsbremsvorrichtung derart ausgebildet ist, dass die Größe der Bremswirkung derart einstellbar ist, dass bei Erreichen mindestens einer Endstellung und/oder eines Bremsbereichs (I, II), vorzugsweise der oberen Endstellung beziehungsweise des oberen Bremsbereichs (I) der Deichsel (7) das Flurförderzeug annähernd stillsteht.

5. Flurförderzeug (1) nach einem der Ansprüche 1 bis 4, **dadurch gekennzeichnet, dass** die Abhängigkeit der Bremswirkung der Betriebsbremsvorrichtung vom Schwenkwinkel und/oder der Schwenkgeschwindigkeit und/oder der Schwenkbeschleunigung der Deichsel (7) um die horizontale Achse (11) in Form einer Kennlinie und/oder eines Kennfeldes vorgegeben ist.

6. Flurförderzeug (1) nach Anspruch 5, **dadurch gekennzeichnet, dass** die in dem Kennfeld verwendeten Eingangsgrößen mindestens eine das Bremsverhalten des Flurförderzeugs (1) beeinflussende Größe, insbesondere eine der im Folgenden aufgezählten Größen, umfassen: Schwenkwinkel der Deichsel (7), Schwenkgeschwindigkeit der Deichsel (7), Schwenkbeschleunigung der Deichsel (7), Fahrtrichtung des Fahrzeugs (1), Fahrgeschwindigkeit des Fahrzeugs (1), Fahrbeschleunigung des Fahrzeugs (1), Lenkwinkel, Gewicht des Fahrzeugs (1) und/oder der Last.

7. Flurförderzeug (1) nach einem der Ansprüche 1 bis 6, **dadurch gekennzeichnet, dass** die Mittel zur stufenlosen Erfassung des Schwenkwinkels und/oder der Schwenkgeschwindigkeit und/oder der Schwenkbeschleunigung der Deichsel (7) um die horizontale Achse (11) mindestens ein Potentiometer umfassen.

## Claims

1. Industrial truck (1) with a steering tiller (7), capable of pivoting about a horizontal axis (11), a service brake apparatus, the industrial truck (1) having at least one traction engine, in particular at least one electrical traction engine, and the traction engine being in the form of a service brake apparatus, and means for continuous detection of the pivot angle of the steering tiller (7) about the horizontal axis (11), **characterized in that** the service brake apparatus formed by the traction engine is formed in such a way that the braking effect can be adjusted depending on the pivot angle and/or the pivot speed and/or the pivot acceleration of the tiller (7) about the horizontal axis (11).

2. Industrial truck (1) according to Claim 1, **characterized in that** the service brake apparatus is formed in such a way that the braking effect of the service brake apparatus is approximately continuously variable depending on the pivot angle and/or the pivot speed and/or the pivot acceleration of the tiller (7) about the horizontal axis (11).

3. Industrial truck (1) according to Claim 1 or 2, **characterized in that** the service brake apparatus is formed in such a way that the braking effect of the service brake apparatus can be adjusted in a manner approximately proportional to the pivot angle and/or the pivot speed and/or the pivot acceleration of the tiller (7).

4. Industrial truck (1) according to one of Claims 1 to 3, **characterized in that** the service brake apparatus is formed in such a way that the magnitude of the braking effect can be adjusted in such a way that, when at least one end position and/or one brake region (I, II) is reached, preferably the upper end position or the upper brake region (I) of the tiller (7), the industrial truck is approximately at a standstill.

5. Industrial truck (1) according to one of Claims 1 to 4, **characterized in that** the dependence of the braking effect of the service brake apparatus on the pivot angle and/or the pivot speed and/or the pivot acceleration of the tiller (7) about the horizontal axis (11) is predetermined in the form of a characteristic and/or a family of characteristics.

6. Industrial truck (1) according to Claim 5, **characterized in that** the input variables used in the family of characteristics include at least one variable influencing the braking response of the industrial truck (1), in particular one of the following listed variables: pivot angle of the tiller (7), pivot speed of the tiller (7), pivot acceleration of the tiller (7), direction of travel of the vehicle (1), travelling speed of the vehicle (1), travelling acceleration of the vehicle (1), steering angle, weight of the vehicle (1) and/or the load.

7. Industrial truck (1) according to one of Claims 1 to 6, **characterized in that** the means for continuous detection of the pivot angle and/or the pivot speed and/or the pivot acceleration of the tiller (7) about the horizontal axis (11) comprise at least one potentiometer.

## Revendications

1. Chariot de manutention (1), comprenant un timon de direction (7) pouvant pivoter autour d'un axe horizontal (11), un dispositif de frein de service, le chariot de manutention (1) présentant au moins un moteur de conduite, en particulier au moins un moteur de conduite électrique, et le moteur de conduite étant réalisé en tant que dispositif de frein de service, et des moyens pour détecter en continu l'angle de pivotement du timon de direction (7) autour de l'axe horizontal (11),
**caractérisé en ce que**
le dispositif de frein de service formé par le moteur de conduite est réalisé de telle sorte que l'effet de freinage puisse être ajusté en fonction de l'angle de pivotement et/ou de la vitesse de pivotement et/ou de l'accélération de pivotement du timon (7) autour de l'axe horizontal (11).

2. Chariot de manutention (1) selon la revendication 1, **caractérisé en ce que** le dispositif de frein de service est réalisé de telle sorte que l'effet de freinage du dispositif de frein de service puisse être ajusté approximativement en continu en fonction de l'angle de pivotement et/ou de la vitesse de pivotement et/ou de l'accélération de pivotement du timon (7) autour de l'axe horizontal (11).

3. Chariot de manutention (1) selon la revendication 1 ou 2, **caractérisé en ce que** le dispositif de frein de service est réalisé de telle sorte que l'effet de freinage du dispositif de frein de service puisse être ajusté de manière approximativement proportionnelle à l'angle de pivotement et/ou à la vitesse de pivotement et/ou à l'accélération de pivotement du timon (7).

4. Chariot de manutention (1) selon l'une quelconque des revendications 1 à 3, **caractérisé en ce que** le dispositif de frein de service est réalisé de telle sorte que l'amplitude de l'effet de freinage puisse être ajustée de telle sorte que lorsqu'au moins une position de fin de course est atteinte et/ou qu'une plage de freinage (I, II) est atteinte, de préférence la position de fin de course supérieure, ou la plage de freinage supérieure (I) du timon (7), le chariot de manutention s'arrête sensiblement.

5. Chariot de manutention (1) selon l'une quelconque des revendications 1 à 4, **caractérisé en ce que** la dépendance de l'effet de freinage du dispositif de frein de service par rapport à l'angle de pivotement et/ou à la vitesse de pivotement et/ou à l'accélération de pivotement du timon (7) autour de l'axe horizontal (11) est prédéfinie sous la forme d'une courbe caractéristique et/ou d'un champ caractéristique.

6. Chariot de manutention (1) selon la revendication 5, **caractérisé en ce que** les grandeurs d'entrée utilisées dans le champ caractéristique comprennent au moins une grandeur influençant le comportement de freinage du chariot de manutention (1), notamment l'une des grandeurs sélectionnées suivantes : angle de pivotement du timon (7), vitesse de pivotement du timon (7), accélération de pivotement du timon (7), direction de conduite du véhicule (1), vitesse de conduite du véhicule (1), accélération de conduite du véhicule (1), angle de direction, poids du véhicule (1) et/ou de la charge.

7. Chariot de manutention (1) selon l'une quelconque des revendications 1 à 6, **caractérisé en ce que** les moyens pour la détection en continu de l'angle de pivotement et/ou de la vitesse de pivotement et/ou de l'accélération de pivotement du timon (7) autour de l'axe horizontal (11) comprennent au moins un potentiomètre.
